# EUROPÄISCHE PATENTSCHRIFT

(11) **EP 2 519 699 B1**
(45) Veröffentlichungstag und Bekanntmachung des Hinweises auf die Patenterteilung: **15.02.2017**
(21) Anmeldenummer: 10822861.0
(22) Anmeldetag: 31.12.2010
(51) Int. Cl.: E04B 9/04, E04B 1/86, F24F 5/00

(54) **DECKEN- ODER WANDELEMENT**
CEILING OR WALL ELEMENT
ÉLÉMENT DE PLAFOND OU DE CLOISON

(30) Priorität: 31.12.2009 DE 102009055443
(43) Veröffentlichungstag der Anmeldung: 07.11.2012
(73) Patentinhaber: SGL Carbon SE, 65201 Wiesbaden (DE)
(72) Erfinder: GUCKERT, Werner, 86674 Baar (DE); KIPFELSBERGER, Christian, 95199 Naila (DE); HOMM, Karl-Georg, 45768 Marl (DE); MICHELS, Robert, 86672 Thierhaupten (DE)
(86) Internationale Anmeldenummer: PCT/EP2010/070964
(87) Internationale Veröffentlichungsnummer: WO 2011/080333

(56) Entgegenhaltungen:
- EP-A- 2 130 985
- EP-A2- 1 512 933
- DE-A1-102005 029 051
- DE-U1-202009 011 329
- US-A- 3 404 061
- US-A- 5 955 386

## Beschreibung

Die Erfindung betrifft ein Decken- oder Wandelement zur Befestigung an einer Decke oder einer Wand mit einem schallabsorbierenden Kernmaterial, sowie eine Akustikdecke oder eine Akustikwand, welche solche Decken- oder Wandelemente enthält. Die Erfindung betrifft ferner die Verwendung eines solchen Decken-oderwandelements als
Schallabsorber in Akustikelementen oder zur Herstellung von schallabsorbierenden Akustikdecken oder wänden.

Ein Decken- oder Wandelement gemäß dem Oberbegriff des Anspruchs 1 zur Befestigung an einer Decke oder einer Wand
mit einem schalldämmenden Kernmaterial wird in EP1512933A2 beschrieben, wobei das Kernmaterial aus binderfreiem expandiertem Graphit besteht. Größere Räume, die von Betonwänden oder Betondecken umgeben sind und insbesondere Büroräume und Hallen weisen häufig eine ungenügende Schallabsorption auf, da Schallwellen an den glatten Betondecken und -Wänden reflektiert werden. Zur Verbesserung der Schallabsorption ist bekannt, die Wände und/oder die Decken mit einer schallabsorbierenden Verkleidung zur versehen. Derartige schallabsorbierende Verkleidungen werden beispielsweise in Form von flächigen Wand- oder Deckenelementen über eine Rahmenkonstruktion an der Wand bzw. der Decke befestigt.

Zur Klimatisierung von Räumen mit Betondecken und/oder -wanden sind aus dem Stand der Technik sogenannte Betonkernaktivierungs-Systeme bekannt. Bei diesen werden Heiz- oder Kühlmedien führende Rohrleitungen in, unter oder auf der Betondecke bzw. der Betonwand angebracht. Durch Speicherung der Heiz- bzw. Kühlenergie in der Betonmasse der Wände bzw. der Decken und einer zeitverzögerten Abgabe der gespeicherten Heiz- bzw. Kühlenergie kann eine energieeffiziente Klimatisierung der Räume erzielt werden. So kann beispielsweise in der Nacht ein Kühlfluid (bspw. Wasser) abgekühlt und durch die Rohrleitungen in einer betonkernaktivierten Decke oder Wand geleitet werden, wodurch sich die Decke bzw. die Wand langsam abkühlt. Die so in der Betondecke bzw. der Betonwand gespeicherte Kühlenergie kann dann während des Tages, insbesondere in warmen Sommermonaten zur Erniedrigung der Raumtemperatur langsam in den Raum abgegeben werden.

Bei der Verkleidung von Decken oder Wänden mit einer Betonkernaktivierung mit flächigen Schallabsorptions-Elementen verschlechtert sich die Effizienz des Betonkernaktivierungssystems, da die schallabsorbierenden Decken- oder Wandelemente, welche zur Erhöhung der Schallabsorption an den Decken und/oder Wänden angebracht werden, in der Regel eine schlechte Wärmeleitung aufweisen. Die Effizienz des Betonkernaktivierungssystems wird durch die schallabsorbierenden Decken- bzw. Wandelemente wesentlich verschlechtert, weil die schallabsorbierenden Elemente die betonkernaktivierten Decken und Wände gegenüber dem Raum thermisch dämmen.

Zur Lösung dieses Problems schlägt die europäische Patentschrift EP 1 167 888 B1 die Verwendung von schalldämmenden Akustikelementen in Form von flächigen Deckenpaneelen vor, welche einen schallabsorbierenden Kern aufweisen und über thermisch leitfähige Übertragungspfade bzw. Wärmebrücken verfügen, welche eine flächige thermische Übertragung an die Betonwand oder-decke ermöglichen. Bei den flächigen Paneelen handelt es sich um Schallabsorberplatten, beispielsweise aus Mineralwolle, welche in eine wärmeleitende Außenhülle eingebracht sind. Die thermisch leitende Außenhülle steht in wärmeleitendem Verbund mit der Betondecke oder Betonwand, so dass eine gute Übertragung von Wärme (bzw. Kälte) von der Betonwand bzw. der Betondecke an den Raum gewährleistet ist. Auf diese Weise kann Wärme (bzw. Kälte) verlustarm von der Betonwand oder der Betondecke an den Raum zum Heizen (bzw. Kühlen) abgegeben werden.

Die mit den aus der EP 1 167 888 B1 bekannten Decken- oder Wandelementen erzielbare Wärmeübertragung erweist sich jedoch nach wie vor als unzureichend. Um eine ausreichende Wärmeübertragung zu gewährleisten, wird daher in der Praxis in der Regel nur ein Teil der Gesamtfläche der Wände bzw. der Decken des Raumes mit solchen Decken- oder Wandelementen verkleidet. Dies wiederum verschlechtert jedoch die Schallabsorption.

Der Erfindung liegt daher die Aufgabe zugrunde, ein Decken- oder Wandelement zur Verkleidung von Decken bzw. Wänden eines Raumes aufzuzeigen, mit denen zum einen eine gute Schallabsorption und zum anderen eine möglichst gute Wärmeübertragung zwischen den Wänden bzw. Decken und dem Rauminneren ermöglicht werden kann. Eine weitere Aufgabe der Erfindung besteht darin, Decken- oder Wandelemente bereit zu stellen, welche einerseits eine gute Schallabsorption und andererseits eine (aktive) Klimatisierung eines Raumes ermöglichen. Darüber hinaus soll eine möglichst einfache und insbesondere zeit-und kostensparende Befestigung der Decken- oder Wandelemente an einer Decke bzw. einer Wand ermöglicht werden.

Diese Aufgaben werden mit einem Decken- oder Wandelement mit den Merkmalen des Anspruchs 1 gelöst.

Zur Lösung der genannten Aufgaben schlägt die Erfindung ein an einer Decke oder einer Wand befestigbares Decken- bzw. Wandelement vor, welches ein schallabsorbierendes Kernmaterial aufweist, wobei das Kernmaterial binderfreies expandiertes Graphit enthält oder gänzlich aus binderfreiem expandiertem Graphit besteht, wobei das Kernmaterial in einem an der Decke bzw. der Wand befestigbaren Rahmen angeordnet ist.

Die Herstellung von expandiertem Graphit (sog. Graphitexpandat) ist u. a. aus der US 3,404,061-A bekannt. Zur Herstellung von expandiertem Graphit werden Graphiteinlagerungsverbindungen bzw. Graphitsalze wie zum Beispiel Graphithydrogensulfat oder Graphitnitrat schockartig erhitzt. Dabei vergrößert sich das Volumen der Graphitpartikel um einen Faktor von cirka 200 bis 400 und gleichzeitig sinkt die Schüttdichte auf Werte von 2 - 20 g/l. Das so erhaltende Graphitexpandat besteht aus wurm- bzw. ziehharmonikaförmigen Aggregaten. Wird vollständig expandiertes Graphit unter gerichteter Einwirkung eines Druckes kompaktiert, ordnen sich die Schichtebenen des Graphits bevorzugt senkrecht zur Einwirkungsrichtung des Druckes an, wobei sich die einzelnen Aggregate untereinander verhaken. Auf diese Weise lassen sich ohne Binderzusatz selbsttragende Flächengebilde wie zum Beispiel Bahnen, Platten oder Formkörper aus expandiertem Graphit herstellen.

Expandiertes Graphit kann auch mit anderen Materialien wie zum Beispiel Kunststoffen vermischt werden. Für die erfindungsgemäße Verwendung von expandiertem Graphit eignet sich insbesondere die Vermischung von expandiertem Graphit mit thermoplastischen und/oder duroplastischen Kunststoffen. Der Kunststoff kann dabei beispielweise durch Imprägnierung oder über ein Pulververfahren in das expandierte Graphit eingebracht werden. So lassen sich Formkörper, beispielsweise flächige Platten, aus einem Gemisch von expandiertem Graphit und einem Kunststoff herstellen. Die Vermischung des expandierten Graphits mit Kunststoff erhöht die Steifigkeit und verbessert dadurch die Handhabung der so hergestellten Formkörper aus dem Graphit-Kunststoff-Gemisch.

Reines Graphitexpandat verfügt ebenso wie Gemische aus expandiertem Graphit und Kunststoff über eine sehr gute Wärmeleitfähigkeit. Die Wärmeleitfähigkeit eines Gemisches aus expandiertem Graphit mit einem Anteil von 50 Gew.-% eines Kunststoffs ist je nach Art des verwendeten Kunststoffmaterials immer noch sehr hoch.

Neben den hohen Wärmeleitfähigkeitswerten verfügt expandiertes Graphit darüber hinaus überraschender Weise auch über eine hohe Schallabsorptionsfähigkeit. Durch die Kombination dieser Eigenschaften eignet sich expandiertes Graphit als Schallabsorber in Akustikelementen oder zur Herstellung von schallabsorbierenden Akustikdecken oder -wänden, insbesondere dann, wenn gleichzeitig zur Schallabsorption auch eine gute Wärmeübertragung von den Akustikdecken bzw. -wänden in den Raum gefordert wird, wie dies beispielsweise bei betonkernaktivierten Decken oder Wänden der Fall ist.

Gemäß der Erfindung wird vorgeschlagen, binderfreies expandiertes Graphit als
schallabsorbierendes Kernmaterial in Decken- oder Wandelementen zu verwenden. Bei dem Kernmaterial kann es sich um reines binderfreies Graphitexpandat oder
um eine Mischung von binderfreiem expandiertem Graphit mit einem Kunststoff handeln. Im
Folgenden wird für beide Varianten jeweils von Graphit-Kernmaterial gesprochen. Das schallabsorbierende Graphit-Kernmaterial wird in einem Rahmen
angeordnet, der direkt in thermischem Kontakt an eine Decke bzw. eine Wand befestigt werden kann. Bei dem Rahmen kann es sich insbesondere um eine aus einem Metallblech gefertigte Kassette mit einer perforierten Oberfläche handeln. Bevorzugt ist die Kassette an einer Seite offen, um das Kernmaterial in die Kassette einfügen zu können. Das Graphit-Kernmaterial, dessen Oberfläche bevorzugt aufgeraut oder porös ist, kann in der Kassette lose eingelegt oder dort beispielsweise durch Verkleben befestigt werden.

Wird reines Graphitexpandat als schallabsorbierendes Kernmaterial verwendet, liegt die Dichte des Kernmaterials zwischen 0,04 und 0,10 g/cm³. Bei der Verwendung eines Gemisches aus expandiertem Graphit und einem Kunststoff liegt die Dichte des Kernmaterials je nach Kunststoffanteil entsprechend höher. Die Wärmeleitfähigkeit der erfindungsgemäßen Decken- oder Wandelemente beträgt mehr als 2 W/mK.

Als nicht erfindungsgemäße Alternative zur Einbettung des schallabsorbierenden Graphit-Kernmaterials in einen Rahmen, der an der Decke bzw. der Wand befestigt wird, kann das Graphit-Kernmaterial auch in der Form von Leichtbauplatten aus expandiertem Graphit oder einer Mischung aus expandiertem Graphit mit einem Kunststoff direkt an die Oberfläche einer Decke oder einer Wand befestigt werden, beispielsweise durch Verkleben oder durch Verschrauben. Zur Erhöhung der thermischen Kopplung zwischen der Decke oder der Wand und dem Graphit-Kernmaterial ist es zweckmäßig, zwischen der Oberfläche der Decke bzw. der Wand und dem Graphit-Kernmaterial eine Zwischenschicht aus einem thermisch leitfähigen Material anzuordnen. Hierfür kann beispielsweise ein thermisch leitfähiger Kleber oder eine Metallplatte verwendet werden. Der thermische Kontakt zwischen dem schallabsorbierenden Graphit-Kernmaterial und der Oberfläche der Decke bzw. der Wand kann durch Aufrauen der Oberfläche des Kernmaterials verbessert werden. Das Aufrauen der Oberfläche oder eine poröse Oberflächenstruktur des Kernmaterials verbessert darüber hinaus auch die Schallabsorption.

Die erfindungsgemäßen Decken- oder Wandelemente können auch zum nachträglichen Einbau eines aktiven Klimatisierungssystems für Räume verwendet werden, welche noch nicht über betonkernaktivierte Decken oder Wände verfügen. Hierfür ist vorgesehen, in dem schallabsorbierenden Kernmaterial Rohrleitungen zur Durchleitung eines Fluids einzubetten. Diese Rohrleitungen können dann zur Durchleitung eines Wärme- bzw. Kältemittels (wie zum Beispiel Wasser) verwendet werden, um wie bei einer Betonkernaktivierung eine Wärme- bzw. Kältespeicherung in den Decken oder Wänden mit einer verzögerten Abgabe der Wärme bzw. Kälte an den Raum einzurichten.

Die erfindungsgemäßen Decken- oder Wandelemente werden großflächig und bevorzugt vollflächig unter thermischer Kopplung zwischen der Oberfläche der Wand oder der Decke und der Hauptfläche des Wand- bzw. Deckenelements an einer Decke bzw. einer Wand eines Raumes befestigt. Zur großflächigen Verkleidung einer Decke oder einer Wand mit den erfindungsgemäßen Decken-oder Wandelementen werden diese neben- und/oder hintereinander auf Stoß liegend angeordnet und an der Wand befestigt. Zweckmäßig wird auf die so angeordneten Decken- oder Wandelemente eine optisch ansprechende Verkleidung, wie zum Beispiel eine Putzschicht aufgebracht. Um die Schallabsorption und die Wärmeleitfähigkeit der gesamten Anordnung nicht zu verschlechtern, sollte die Verkleidung eine gute Wärmeleitfähigkeit sowie eine gute Durchlässigkeit für Schallwellen aufweisen.

Nachfolgend wird die Erfindung anhand von Ausführungsbeispielen unter Bezugnahme auf die begleitenden Zeichnungen näher erläutert. Die Zeichnungen zeigen:
Figur 1: schematische Darstellung der Verwendung eines erfindungsgemäßen Deckenelements in einer ersten Ausführungsform, welches an eine Betondecke mit Betonkernaktivierung befestigt ist;
Figur 2: Querschnitt durch das in Figur 1 gezeigte Deckenelement;
Figur 3: schematische Darstellung der Verwendung eines erfindungsgemäßen Deckenelements in einer zweiten Ausführungsform, welches an eine Betondecke ohne Betonkernaktivierung befestigt ist;
Figur 4: Querschnitt durch das in Figur 3 gezeigte Deckenelement;
Figur 5: schematische Darstellung der Verwendung des erfindungsgemäßen Deckenelements in der ersten Ausführungsform, welches an eine Betondecke ohne Betonkernaktivierung befestigt ist;
Figur 6: schematische Darstellung der Verwendung eines nicht erfindungsgemäßen Deckenelements in einer dritten Ausführungsform, welches an eine Betondecke ohne Betonkernaktivierung befestigt ist;
Figur 7: schematische Darstellung der Verwendung eines nicht erfindungsgemäßen Deckenelements in einer vierten Ausführungsform, welches an eine Betondecke mit Betonkernaktivierung befestigt ist.

In den nachfolgend beschriebenen Ausführungsbeispielen der Erfindung wird die Verwendung von erfindungsgemäßen Decken- oder Wandelementen zur Befestigung an einer sich in horizontaler Ebene erstreckenden Decke 5 gezeigt. Es wird daher jeweils von Deckenelementen gesprochen. Die erfindungsgemäßen Decken- oder Wandelemente können jedoch in entsprechender Weise auch zur Befestigung an einer vertikalen Wand verwendet werden. In den zeichnerisch dargestellten Ausführungsbeispielen sind gleiche oder sich entsprechende Teile mit gleichen Bezugszeichen versehen.

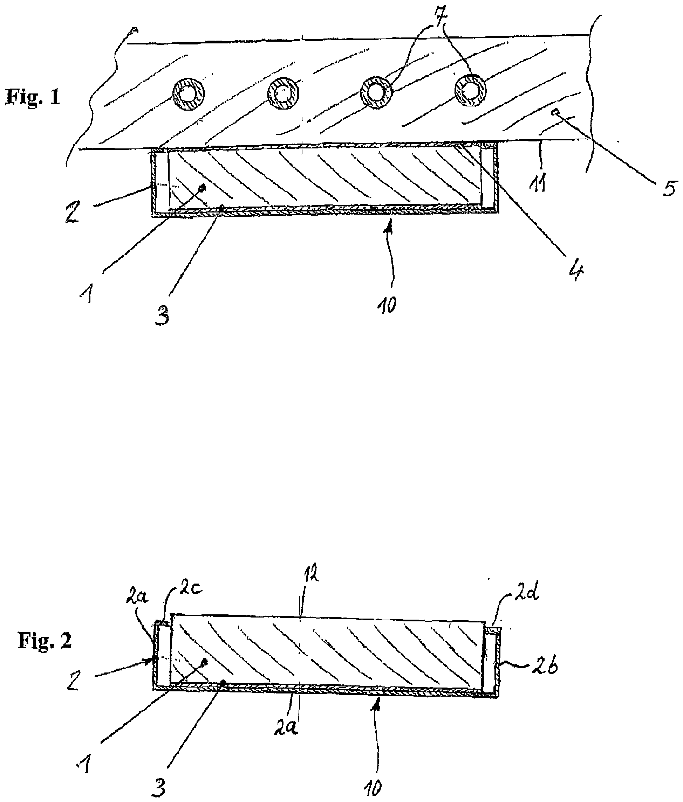

In Figur 1 ist ein erfindungsgemäßes Deckenelement 10 gezeigt, welches an einer betonkernaktivierten Decke 5 befestigt ist. Unter einer betonkernaktivierten Decke 5 wird hierbei eine Betondecke verstanden, in der Rohrleitungen 7 zur Durchleitung eines Heiz- oder Kühlmediums, wie zum Beispiel Wasser, angeordnet sind. Das Deckenelement 10 ist an der Unterseite 11 der Decke 5 befestigt.

In Figur 2 ist das Deckenelement 10 im Schnitt dargestellt. Das Deckenelement 10 umfasst einen als Kassette 2 ausgebildeten Rahmen und ein in dem Rahmen angeordnetes Kernmaterial 1. Bei dem Kernmaterial 1 handelt es sich um ein schallabsorbierendes Material, welches erfindungsgemäß entweder reines binderfreies Graphitexpandat ist oder aus einer Mischung von binderfreiem expandiertem Graphit mit einem Kunststoffmaterial hergestellt ist. Die Kassette 2 ist durch einen Kassettenboden 2a und an diesem kastenförmig angeordneten Kassettenwände gebildet, wobei in der Schnittzeichnung der Figur 2 lediglich zwei der insgesamt vier Kassettenwände zu sehen sind. Zweckmäßig sind der Kassettenboden 2a und die Kassettenwände 2a, 2b aus Metallblech gefertigt und zumindest der Kassettenboden 2a verfügt zweckmäßig über eine Perforation. Hierfür kann der Kassettenboden beispielsweise aus einem Lochblech gefertigt werden. Die Perforation in dem Kassettenboden 2a stellt sicher, dass die Schallwellen den Rahmen, in dem das schallabsorbierende Graphit-Kernmaterial 1 angeordnet ist, durchdringen können. Bei dem in der Figur 2 gezeigten Ausführungsbeispiel ist zwischen der Oberseite des Kassettenbodens 2a und dem darauf aufliegenden Graphit-Kernmaterial 1 ein Akustikvlies 3 angeordnet, das eine besonderes hohe Schalldämmung bewirken kann. Statt des Akustikvlies 3 kann die Verbindung zwischen dem Graphit-Kernmaterial 1 und dem Kassettenboden 2a auch über einen Kleber erfolgen, über den die Unterseite des Kernmaterials 1 an der Oberseite des Kassettenbodens 2a verklebt ist. Eine Verklebung des Kernmaterials 1 mit dem Kassettenboden 2a gewährleistet einerseits eine gute thermische Kopplung und andererseits auch eine gute Schallkopplung.

Bevorzugt ist das schallabsorbierende Graphit-Kernmaterial 1 in Form einer Leichtbauplatte in dem Rahmen (Kassette 2) angeordnet, wobei zweckmäßig die Oberseite 12 des schallabsorbierenden Kernmaterials 1 über die Oberkanten 2c, 2d der Kassettenwände 2a, 2b übersteht, wie in Figur 2 gezeigt.

Zur Befestigung des in Figur 2 gezeigten Deckenelements 10 an der in Figur 1 gezeigten betonkernaktivierten Decke 5 wird die Kassette 2 an der Unterseite 11 der Decke 5 angeschraubt. Beim Anschrauben der Kassette 2 an die Decke 5 wird das Graphit- Kernmaterial 1 zusammengedrückt, bis die Oberseite 12 des Kernmaterials 1 bündig mit den Oberkanten 2c, 2d der Kassettenwände 2a, 2b abschließt. Das Zusammendrücken des Kernmaterials 1 wird dabei durch die Verformbarkeit des Graphit-Kernmaterials 1 ermöglicht. Das in Lotrichtung zur Deckenoberfläche 11 zusammengedrückte Kernmaterial 1 steht nach der Befestigung des Deckenelements 10 an der Decke 5 über die gesamte Hauptfläche (Oberfläche 12) in thermischem Kontakt mit der Unterseite 11 der Decke 5.

Zur Verbesserung der Schallabsorption des Graphit-Kernmaterials 1 und zur Verbesserung des thermischen Kontakts mit der Unterseite 11 der Decke 5 sind die Oberflächen des Graphit-Kernmaterials 1 angeraut oder porös ausgebildet. Eine aufgeraute oder poröse Oberfläche des Graphit-Kernmaterials 1 gewährleistet auch bei einer unebenen Unterseite 11 der Decke 5 einen guten thermischen Kontakt über die gesamte Anlagefläche des Graphit-Kernmaterials 1 an der Decke 5. Die thermische Kopplung zwischen dem schallabsorbierenden Graphit-Kernmaterial 1 und der Betondecke 5 lässt sich ferner durch Einfügen einer Zwischenschicht 4 verbessern. Bei dem in der Figur 1 gezeigten Ausführungsbeispiel ist eine solche Zwischenschicht 4 zwischen der Oberseite 12 des Deckenelements 10 und der Unterseite 11 der Decke 5 dargestellt. Bei dieser Zwischenschicht kann es sich entweder um eine Platte aus einem thermisch gut leitfähigen Material, wie zum Beispiel eine Metallplatte, handeln. Zweckmäßig handelt es sich bei der Metallplatte um einen Deckel, mit dem die oben offene Kassette 2 abgedeckt wird. Bei der Zwischenschicht 4 kann es sich jedoch auch um eine Kleberschicht handeln, über welche die Oberseite 12 des Graphit-Kernmaterials 1 an der Unterseite 11 der Decke 5 verklebt wird.

Mit einer Anordnung, wie sie in Figur 1 gezeigt ist, lässt sich im gesamten Frequenzbereich des hörbaren Schallspektrums ein Schallabsorptionsgrad von 0,1 bis 0,7 % erzielen. Die Wärmeleitfähigkeit der Anordnung beträgt über die gesamte Fläche des Deckenelements 10 zwischen 3 und 5 W/mK.

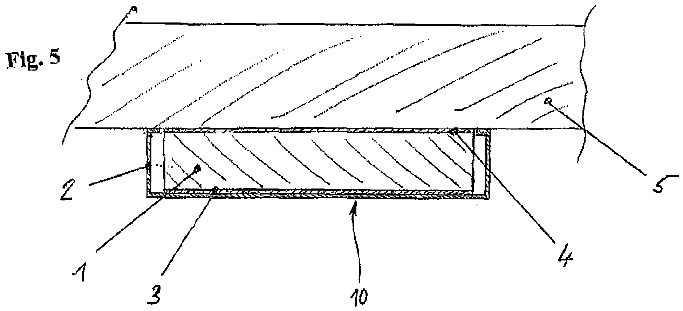

Das in Figur 2 gezeigte Deckenelement 10 lässt sich in entsprechender Weise auch an einer Decke 5 ohne Betonkernaktivierung anordnen. Dieses Ausführungsbeispiel ist schematisch in Figur 5 gezeigt.

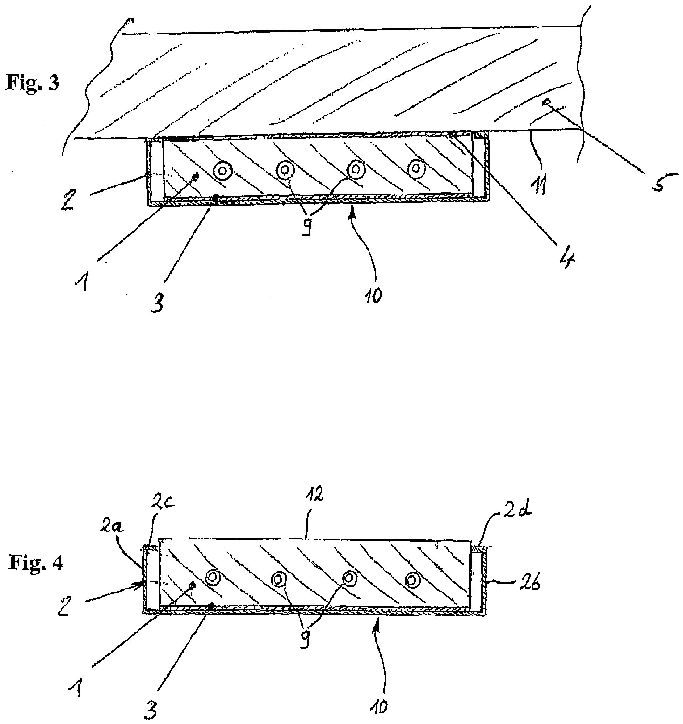

Die Figuren 3 und 4 zeigen ein Ausführungsbeispiel eines erfindungsgemäßen Deckenelements 10, mit dem Decken 5 ohne Betonkernaktivierung (nachträglich) mit einem System zur aktiven Klimatisierung des Raumes ausgestattet werden können. Hierfür ist - wie in Figur 4 gezeigt - ein Deckenelement 10 vorgesehen, welches den gleichen Grundaufbau aufweist, wie das in Figur 2 gezeigte Deckenelement. In dem schallabsorbierenden Graphit-Kernmaterial 1 sind bei diesem Ausführungsbeispiel Rohrleitungen 9 verlegt. Die Rohrleitungen 9 sind in dem Graphit-Kernmaterial 1 eingebettet und bilden dort ein Rohrleitungssystem, mit dem ein Heiz- oder Kühlmedium durch das Deckenelement 10 geleitet werden kann. Durch die thermische Kopplung des Graphit-Kernmaterials 1 an die Betondecke 5 kann die von dem Heiz- bzw. Kühlmedium in das Deckenelement 10 eingebrachte Wärme (bzw. Kälte) an die Masse der Betondecke 5 abgeleitet und dort zur zeitverzögerten Abgabe an den Raum gespeichert werden. Die in dem Graphit-Kernmaterial 1 angeordneten Rohrleitungen 9 werden hierfür an einen Wärme- bzw. Kältespeicher gekoppelt, über den das Heiz- bzw. Kühlmedium durch das Rohrleitungssystem gefördert wird.

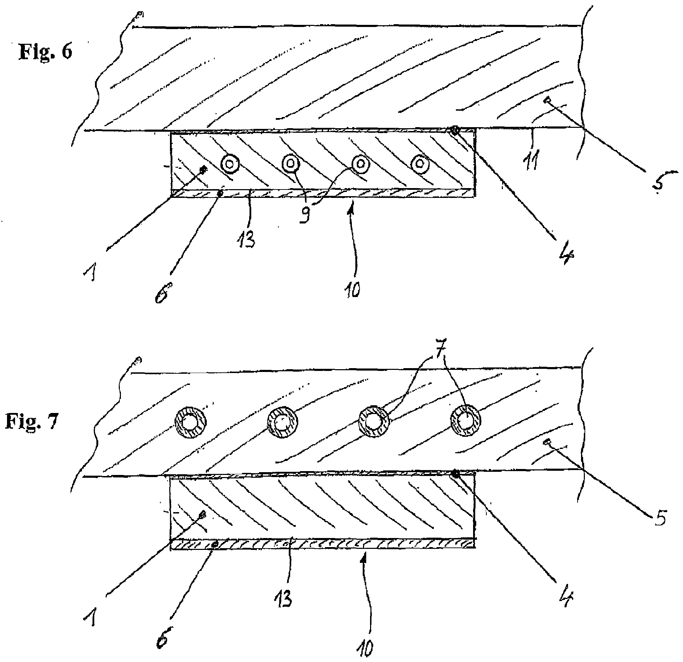

In Figur 6 ist ein nicht erfindungsgemäßes Ausführungsbeispiel für die Verwendung eines
erfindungsgemäßen Deckenelements 10 gezeigt. Bei diesem Ausführungsbeispiel ist das Deckenelement 10 als Leichtbauplatte aus einem Graphit-Kernmaterial 1 gebildet. Die Leichtbauplatte aus dem Graphit-Kernmaterial 1 ist dabei - anders als bei den Ausführungsbeispielen der Figuren 1 bis 5 - nicht in einen Rahmen eingelegt. Die Leichtbauplatte ist vielmehr direkt in thermischem Kontakt mit der Unterseite 11 der Decke 5 an der Decke 5 befestigt. Die Befestigung erfolgt zweckmäßig über eine zwischen der Oberseite des Graphit-Kernmaterials 1 und der Unterseite 11 der Decke 5 angeordnete Kleberschicht 4. Bei der Kleberschicht 4 handelt es sich bevorzugt um eine Schicht aus einem thermisch gut leitfähigen Kleber, wie etwa einen mit leitfähigen Partikeln gefüllten Kleber. Auf der Unterseite 13 der Leichtbauplatte aus dem Graphit-Kernmaterial 1 ist eine Verkleidung aufgebracht, beispielsweise in Form einer Putzschicht 6 oder einer Tapete oder dergleichen. Wie bei dem Ausführungsbeispiel der Figur 4 sind auch bei dem in Figur 6 gezeigten Ausführungsbeispiel des Deckenelements 10 Rohrleitungen 9 zur Durchleitung eines Heiz- oder Kühlmediums in das Graphit-Kernmaterial 1 eingebettet. Diese Ausführungsform eignet sich zur Verwendung an Betondecken 5 ohne Betonkernaktivierung, wie in Figur 6 dargestellt.

Für eine Verwendung eines dem Ausführungsbeispiel der Figur 6 entsprechenden Deckenelements 10 an einer Betondecke 5 mit Betonkernaktivierung kann auf die Rohrleitungen 9 in dem Graphit-Kernmaterial 1 verzichtet werden. Dieses nicht erfindungsgemäße Ausführungsbeispiel ist in Figur 7 zeichnerisch dargestellt.

In den zeichnerisch dargestellten Ausführungsbeispielen der Figuren 1, 3 und 5 - 7 ist jeweils nur ein an der Decke 5 befestigtes Deckenelement 10 gezeigt. Mit den erfindungsgemäßen Deckenelementen oder Wandelementen können jedoch Decken oder Wände auch vollflächig verkleidet werden, indem mehrere Decken-oder Wandelemente auf Stoß nebeneinander bzw. hintereinander angeordnet und an der Decke bzw. der Wand befestigt werden. Da sich das binderfreie Graphit-Kernmaterial,
insbesondere bei einer Vermischung mit Kunststoffen, problemlos als stabiler Formkörper oder Vorpressling herstellen lässt, können erfindungsgemäße Wand-oder Deckenelemente in verschiedensten Formen hergestellt werden, wodurch vielfältige Möglichkeiten bei der Gestaltung von Akustikdecken oder -wänden eröffnet werden, die sich mit den bekannten Lösungen nicht realisieren lassen. Die erfindungsgemäße Wand- oder Deckenelemente können ohne großen Aufwand an einer Wand oder Decke montiert werden und lassen sich ohne jegliche Beeinträchtigung der gewünschten Schallabsorption und der thermischen Leitfähigkeit durch optisch ansprechende Verkleidungen (wie Putzschichten oder Tapeten) der Gestaltung des Raumes anpassen.

## Patentansprüche

1. Decken- oder Wandelement (10) zur Befestigung an einer Decke (5) oder einer Wand mit einem schallabsorbierenden Kernmaterial (1), wobei das Kernmaterial (1) binderfreies expandiertes Graphit enthält oder aus binderfreiem expandiertem Graphit besteht, **dadurch gekennzeichnet, dass** das Kernmaterial (1) in einem an der Decke bzw. der Wand befestigbaren Rahmen angeordnet ist.

2. Decken- oder Wandelement nach Anspruch 1, **dadurch gekennzeichnet, dass** der Rahmen aus einem thermisch leitfähigen Material, insbesondere aus einem Metallblech gefertigt ist.

3. Decken- oder Wandelement nach Anspruch 1 oder 2, **dadurch gekennzeichnet, dass** das Kernmaterial (1) in dem Rahmen eingeklebt ist.

4. Decken- oder Wandelement nach einem der Ansprüche 2 bis 3, **dadurch gekennzeichnet, dass** der Rahmen als Kassette (2) ausgebildet ist, welche an einer Seite offen ist.

5. Decken- oder Wandelement nach Anspruch 4, **dadurch gekennzeichnet, dass** das in der Kassette (2) angeordnete Kernmaterial an der offenen Seite der Kassette (2) über der Rahmenkante (8) vorsteht.

6. Decken- oder Wandelement nach einem der Ansprüche 1 bis 5, **dadurch gekennzeichnet, dass** der Rahmen als Kassette (2) mit einer perforierten Oberfläche ausgebildet ist.

7. Decken- oder Wandelement nach einem der voranstehenden Ansprüche, **dadurch gekennzeichnet, dass** die Oberfläche des Kernmaterials (1) aufgeraut oder porös ist.

8. Decken- oder Wandelement nach einem der voranstehenden Ansprüche, **dadurch gekennzeichnet, dass** die Dichte des Kernmaterials (1) zwischen 0,04 und 0,10 g/cm³ liegt.

9. Decken- oder Wandelement nach einem der voranstehenden Ansprüche, **dadurch gekennzeichnet, dass** es eine Wärmeleitfähigkeit von mehr als 2 W/mK aufweist.

10. Decken- oder Wandelement nach einem der voranstehenden Ansprüche, **dadurch gekennzeichnet, dass** es sich bei dem Kernmaterial (1) um eine Mischung aus expandiertem Graphit und einem Kunststoff, insbesondere einem Thermoplasten oder einem Duroplasten handelt.

11. Decken- oder Wandelemente nach Anspruch 11, **dadurch gekennzeichnet, dass** der Kunststoffgehaft bei 5 bis 50 Gew.-% und bevorzugt zwischen 8 bis 12 Gew.-% liegt.

12. Decken- oder Wandelement nach einem der voranstehenden Ansprüche, **dadurch gekennzeichnet, dass** in dem Kernmaterial (1) Rohrleitungen (9) zur Durchleitung eines Fluids eingebettet sind.

13. Verwendung eines Decken- oder Wandelements nach einem der voranstehenden Ansprüche als schallabsorbierenden Akustikdecke oder - wand.

14. Verwendung nach Anspruch 13, **dadurch gekennzeichnet, dass** das expandierte Graphit in Form von Graphit-Leichtbauplatten in thermischer Kopplung an eine Wand (5) oder eine Decke befestigt wird.

15. Verwendung nach Anspruch 13 oder 14, **dadurch gekennzeichnet, dass** das expandierte Graphit in Leichtbauplatten bestehend aus einer Mischung von expandiertem Graphit und einem Kunststoff eingearbeitet ist, welche in thermischer Kopplung an eine Wand (5) oder eine Decke befestigt werden.

16. Verwendung nach Anspruch 14 oder 15, **dadurch gekennzeichnet, dass** es sich bei der Wand oder Decke (5) um eine thermisch aktivierte Betonwand oder Betondecke handelt.

17. Verwendung nach einem der Ansprüche 14 bis 16, **dadurch gekennzeichnet, dass** eine thermische Kopplung zwischen der Oberfläche (11) der Wand oder Decke (5) und den Leichtbauplatten vollflächig über die gesamte Hauptfläche (12) der Leichtbauplatten hergestellt wird.

18. Akustikdecke oder -wand mit wenigstens einem Wand- oder Deckenelement nach einem der Ansprüche 1 bis 10.

19. Akustikdecke oder -wand nach Anspruch 18, **dadurch gekennzeichnet, dass** sie eine Betondecke oder Betonwand umfasst, an der die Decken- oder Wandelemente (10) nebeneinander angeordnet befestigt sind, wobei in der Betondecke bzw. der Betonwand Rohrleitungen (7) zur Durchleitung eines Fluids verlaufen.

20. Akustikdecke oder -wand nach Anspruch 18 oder 19, **dadurch gekennzeichnet, dass** eine thermische Kopplung zwischen der Oberfläche (11) der Wand oder Decke (5) und dem oder jedem Wand- bzw. Deckenelement (10) vollflächig über die gesamte Hauptfläche (12) des oder jedes Wand- bzw. Deckenelements (10) ausgebildet ist.

21. Akustikdecke oder -wand nach Anspruch 20, **dadurch gekennzeichnet, dass** die der Decke (5) bzw. der Wand zugewandte Hauptfläche (12) des oder jedes Wand- bzw. Deckenelements (10) unmittelbar ohne Zwischenschicht an die Oberfläche der Decke bzw. der Wand angrenzt.

22. Akustikdecke oder -wand nach einem der Ansprüche 18 bis 21, **dadurch gekennzeichnet, dass** die Wand- oder Deckenelemente (10) nebeneinander angeordnet an der Wand bzw. der Decke (5) befestigt sind und dass auf der der Wand bzw. der Decke (5) abgewandten Oberfläche (13) der Wand- oder Deckenelemente eine Putzschicht (6) aufgebracht ist.

23. Akustikdecke oder -wand nach Anspruch 20, **dadurch gekennzeichnet, dass** zwischen dem oder jedem Wand- bzw. Deckenelement (10) und der Oberfläche (11) der Decke (5) bzw. der Wand eine Zwischenschicht (4) aus einem thermisch leitenden Material, insbesondere aus Metall angeordnet ist.

24. Akustikdecke oder -wand nach Anspruch 23, **dadurch gekennzeichnet, dass** es sich bei der Zwischenschicht (4) um ein Blech eines Metallrahmens handelt, in dem das Kernmaterial des bzw. jedes Wand- oder Deckenelements angeordnet ist.

25. Akustikdecke oder -wand nach Anspruch 23, **dadurch gekennzeichnet, dass** es sich bei der Zwischenschicht (4) um eine thermisch leitende Kleberschicht handelt, über welche die Hauptfläche (12) des bzw. jedes Wand- oder Deckenelements (10) an der Oberfläche (11) der Decke (5) bzw. Wand verklebt ist.

## Claims

1. Ceiling or wall element (10) for fastening to a ceiling (5) or a wall, comprising a sound-absorbing core material (1), the core material (1) containing binderless expanded graphite or consisting of binderless expanded graphite, **characterised in that** the core material (1) is arranged in a frame that can be fastened to the ceiling or the wall.

2. Ceiling or wall element according to claim 1, **characterised in that** the frame is produced from a thermally conductive material, in particular sheet metal.

3. Ceiling or wall element according to either claim 1 or claim 2, **characterised in that** the core material (1) is glued into the frame.

4. Ceiling or wall element according to either claim 2 or claim 3, **characterised in that** the frame is formed as a caisson (2) which is open on one side.

5. Ceiling or wall element according to claim 4, **characterised in that** the core material arranged in the caisson (2) projects beyond the frame edge (8) on the open side of the caisson (2).

6. Ceiling or wall element according to any of claims 1 to 5, **characterised in that** the frame is formed as a caisson (2) having a perforated surface.

7. Ceiling or wall element according to any of the preceding claims, **characterised in that** the surface of the core material (1) is roughened or porous.

8. Ceiling or wall element according to any of the preceding claims, **characterised in that** the density of the core material (1) is between 0.04 and 0.10 g/cm³.

9. Ceiling or wall element according to any of the preceding claims, **characterised in that** it has a thermal conductivity of more than 2 W/mK.

10. Ceiling or wall element according to any of the preceding claims, **characterised in that** the core material (1) is a mixture of expanded graphite and a plastics material, in particular a thermoplastic or a thermoset.

11. Ceiling or wall element according to claim 11, **characterised in that** the plastics content is from 5 to 50 wt.% and preferably between 8 and 12 wt.%.

12. Ceiling or wall element according to any of the preceding claims, **characterised in that** pipelines (9) for the passage of a fluid are embedded in the core material (1).

13. Use of a ceiling or wall element according to any of the preceding claims as a sound-absorbing acoustic ceiling or wall.

14. Use according to claim 13, **characterised in that** the expanded graphite is thermally coupled to a wall (5) or a ceiling in the form of graphite light building board.

15. Use according to either claim 13 or claim 14, **characterised in that** the expanded graphite is incorporated in light building boards which consist of a mixture of expanded graphite and a plastics material and are thermally coupled to a wall (5) or a ceiling.

16. Use according to either claim 14 or 15, **characterised in that** the wall or ceiling (5) is a thermally activated concrete wall or concrete ceiling.

17. Use according to any of claims 14 to 16, **characterised in that** a full-surface thermal coupling between the surface (11) of the wall or ceiling (5) and the light building boards is produced over the entire main surface (12) of the light building boards.

18. Acoustic ceiling or wall comprising at least one wall or ceiling element according to any of claims 1 to 10.

19. Acoustic ceiling or wall according to claim 18, **characterised in that** it comprises a concrete ceiling or concrete wall to which the ceiling or wall elements (10) are fastened side by side, pipelines (7) for the passage of a fluid extending in the concrete ceiling or concrete wall.

20. Acoustic ceiling or wall according to either claim 18 or claim 19, **characterised in that** a full-surface thermal coupling between the surface (11) of the wall or ceiling (5) and the or each wall or ceiling element (10) is formed over the entire main surface (12) of the or each wall or ceiling element (10).

21. Acoustic ceiling or wall according to claim 20, **characterised in that** the main surface (12) of the or each wall or ceiling element (10) that faces the ceiling (5) or wall is directly adjacent to the surface of the ceiling or the wall without an intermediate layer.

22. Acoustic ceiling or wall according to any of claims 18 to 21, **characterised in that** the wall or ceiling elements (10) are fastened to the wall or the ceiling (5) side by side, and **in that** a plaster coat (6) is applied to the surface (13) of the wall or ceiling elements that faces away from the wall or the ceiling (5).

23. Acoustic ceiling or wall according to claim 20, **characterised in that** an intermediate layer (4) made of a thermally conductive material, in particular metal, is arranged between the or each wall or ceiling element (10) and the surface (11) of the ceiling (5) or the wall.

24. Acoustic ceiling or wall according to claim 23, **characterised in that** the intermediate layer (4) is a sheet of a metal frame in which the core material of the or each wall or ceiling element is arranged.

25. Acoustic ceiling or wall according to claim 23, **characterised in that** the intermediate layer (4) is a thermally conductive adhesive layer, by means of which the main surface (12) of the or each wall or ceiling element (10) is adhesively bonded to the surface (11) of the ceiling (5) or wall.

## Revendications

1. Élément de plafond ou de cloison (10) destiné à être fixé à un plafond (5) ou à une cloison, avec un matériau de coeur (1) aux propriétés insonorisantes, dans lequel le matériau de coeur (1) contient du graphite expansé dépourvu de liant ou est composé de graphite expansé dépourvu de liant, **caractérisé en ce que** le matériau de coeur (1) est disposé dans un cadre pouvant être fixé au plafond, respectivement à la cloison.

2. Élément de plafond ou de cloison selon la revendication 1, **caractérisé en ce que** le cadre est fabriqué à partir d'un matériau possédant une conductibilité thermique, en particulier à partir d'une tôle métallique.

3. Élément de plafond ou de cloison selon la revendication 1 ou 2, **caractérisé en ce que le matériau de coeur** (1) est encollé dans le cadre.

4. Élément de plafond ou de cloison selon l'une des revendications 2 à 3, **caractérisé en ce que le** cadre est conçu comme un caisson (2), lequel présente une face ouverte.

5. Élément de plafond ou de cloison selon la revendication 4, **caractérisé en ce que** le matériau de coeur disposé dans le caisson (2) fait saillie au-dessus du bord du cadre (8), au niveau de la face ouverte du caisson (2).

6. Élément de plafond ou de cloison selon l'une des revendications 1 à 5, **caractérisé en ce que** le cadre est conçu comme un caisson (2) avec une surface perforée.

7. Élément de plafond ou de cloison selon l'une des revendications précédentes, **caractérisé en ce que** la surface du matériau de coeur (1) est rugueuse ou poreuse.

8. Élément de plafond ou de cloison selon l'une des revendications précédentes, **caractérisé en ce que** la densité du matériau de coeur (1) se situe entre 0,04 et 0,10 g/cm³.

9. Élément de plafond ou de cloison selon l'une des revendications précédentes, **caractérisé en ce que** ledit élément présente une conductivité thermique supérieure à 2 W/mK.

10. Élément de plafond ou de cloison selon l'une des revendications précédentes, **caractérisé en ce que** le matériau de coeur (1) est un mélange composé de graphite expansé et d'une matière plastique, en particulier d'un thermoplastique ou d'une matière thermodurcissable.

11. Élément de plafond ou de cloison selon la revendication 11, **caractérisé en ce que** la teneur en plastique se situe entre 5 et 50 % en poids et de préférence entre 8 et 12 % en poids.

12. Élément de plafond ou de cloison selon l'une des revendications précédentes, **caractérisé en ce que** des canalisations (9) destinées au transit d'un fluide sont intégrées dans le matériau de coeur (1).

13. Utilisation d'un élément de plafond ou de cloison selon l'une des revendications précédentes dans le cadre d'un plafond acoustique ou d'une cloison acoustique aux propriétés insonorisantes.

14. Utilisation selon la revendication 13, **caractérisée en ce que** le graphite expansé est fixé par accouplement thermique à une cloison (5) ou à un plafond sous la forme de panneaux légers en graphite.

15. Utilisation selon la revendication 13 ou 14, **caractérisée en ce que** le graphite expansé est incorporé dans des panneaux légers composés d'un mélange de graphite expansé et d'une matière plastique, lesquels sont fixés par accouplement thermique à une cloison (5) ou à un plafond.

16. Utilisation selon la revendication 14 ou 15, **caractérisée en ce que** la cloison ou le plafond (5) est une cloison en béton ou un plafond en béton à activation thermique.

17. Utilisation selon l'une des revendications 14 à 16, **caractérisée en ce qu**'un accouplement thermique est réalisé sur l'intégralité de la surface entre la surface (11) de la cloison ou du plafond (5) et les panneaux légers, ce sur la totalité de la surface principale (12) des panneaux légers.

18. Plafond acoustique ou cloison acoustique avec au moins un élément de cloison ou de plafond selon l'une des revendications 1 à 10.

19. Plafond acoustique ou cloison acoustique selon la revendication 18, **caractérisé en ce que** ledit plafond acoustique ou cloison acoustique comprend un plafond en béton ou une cloison en béton, auquel, respectivement à laquelle sont fixés les éléments de plafond ou de cloison (10) en étant disposés de manière juxtaposée, des canalisations (7) destinées au transit d'un fluide s'étendant dans le plafond en béton, respectivement dans la cloison en béton.

20. Plafond acoustique ou cloison acoustique selon la revendication 18 ou 19, **caractérisé en ce qu'**un accouplement thermique est réalisé sur l'intégralité de la surface entre la surface (11) de la cloison ou du plafond (5), d'une part, et l'élément de cloison, respectivement de plafond ou chaque élément de cloison, respectivement de plafond (10), d'autre part, ce sur la totalité de la surface principale (12) de l'élément de cloison, respectivement de plafond ou chaque élément de cloison, respectivement de plafond (10).

21. Plafond acoustique ou cloison acoustique selon la revendication 20, **caractérisé en ce que** la surface principale (12) de l'élément de cloison, respectivement de plafond ou de chaque élément de cloison, respectivement de plafond (10), faisant face au plafond (5), respectivement à la cloison, est directement limitrophe, sans aucune couche intermédiaire, à la surface du plafond, respectivement de la cloison.

22. Plafond acoustique ou cloison acoustique selon l'une des revendications 18 à 21, **caractérisé en ce que** les éléments de cloison ou de plafond (10) sont fixés à la cloison, respectivement au plafond (5) en étant disposés de manière juxtaposée, et **caractérisé en ce qu'**une couche d'enduit (6) est appliquée sur la surface (13) des éléments de cloison ou de plafond, laquelle surface se trouve du côté opposé de la cloison, respectivement du plafond (5).

23. Plafond acoustique ou cloison acoustique selon la revendication 20, **caractérisé en ce qu'**une couche intermédiaire (4) composée d'un matériau à conductivité thermique, en particulier de métal, est disposée entre l'élément de cloison, respectivement de plafond ou entre chaque élément de cloison, respectivement de plafond (10) et la surface (11) du plafond (5), respectivement de la cloison.

24. Plafond acoustique ou cloison acoustique selon la revendication 23, **caractérisé en ce que** la couche intermédiaire (4) est une tôle d'un cadre métallique, dans lequel est disposé le matériau de coeur de l'élément de cloison, respectivement de plafond ou de chaque élément de cloison, respectivement de plafond.

25. Plafond acoustique ou cloison acoustique selon la revendication 23, **caractérisé en ce que** la couche intermédiaire (4) est une couche adhésive à conductivité thermique par l'intermédiaire de laquelle est collée, au niveau de la surface (11) du plafond (5) respectivement de la cloison, la surface principale (12) de l'élément de cloison ou de plafond, respectivement de chaque élément de cloison ou de plafond (10).
